# EUROPÄISCHE PATENTSCHRIFT

(11) **EP 0 867 153 B1**
(45) Veröffentlichungstag und Bekanntmachung des Hinweises auf die Patenterteilung: **26.02.2003**
(21) Anmeldenummer: 98105384.6
(22) Anmeldetag: 25.03.1998
(51) Int. Cl.: A61C 8/00

(54) **Dentalimplantat**
Dental implant
Implant dentaire

(30) Priorität: 27.03.1997 DE 19713012
(43) Veröffentlichungstag der Anmeldung: 30.09.1998
(73) Patentinhaber: FRIADENT GmbH, 68229 Mannheim (DE)
(72) Erfinder: Vizethum, Freimut, Dr. Dipl.-Ing., 68723 Schwetzingen (DE); Heitmann, Alexander, 68219 Mannheim (DE); Zimmermann, Dierk, 67271 Neuleiningen (DE); Neugebauer, Jörg, Dr., 69115 Heidelberg (DE); Bergner, Norbert, Dipl.-Ing., 68229 Mannheim (DE)
(74) Vertreter: Schmitt, Meinrad, Dipl.-Ing.

(56) Entgegenhaltungen:
- EP-A- 0 320 024
- FR-A- 2 571 607
- US-A- 5 527 182

## Beschreibung

Die Erfindung bezieht sich auf ein Dentalimplantat gemäß den im Oberbegriff des Patentanspruchs 1 angegebenen Merkmalen.

Aus der US-A-5 527 182 ist ein derartiges Dentalimplantat bekannt, welches einen im Kiefer verankerbaren Implantatkörper sowie ein Aufbauteil enthält. Mit dem Aufbauteil ist ein Kern oder Körper verbunden, welcher innerhalb eines Elements angeordnet ist, wobei auf letzterem eine Krone befestigbar ist. Zur Drehsicherung des Körpers und des genannten Elements ist ein Gewindestift vorgesehen, welcher nach der Herstellung der Verbindung des Kerns oder Körpers mit dem Aufbauteil in ein Innengewinde des genannten Elements eingeschraubt wird und hierbei mit seinem zylindrischen, inneren Ende in eine Nut des Aufbauteils eingreift. Die Fertigung und Bearbeitung des Körpers und des diesen umgebenden Elements, sowie die Herstellung deren Rotationssicherung mittels des Gewindestifts erfordert einen nicht unerheblichen Aufwand.

Des weiteren ist aus der EP-A-0 320 024 ein Dentalimplantat bekannt, dessen Aufbauteil teilweise von einer zylindrischen Keramikhülse umgeben ist. Zur Befestigung und insbesondere zur Drehsicherung der Keramikhülse bezüglich des Aufbauteils ist kein Hinweis entnehmbar.

Weiterhin ist aus der EP-B-593 926 ein Dentailimplantat bekannt, dessen Implantatkörper am koronalen Ende eine Ausnehmung enthält, in welche ein Aufbauteil teilweise einsetzbar und mittels einer Halteschraube befestigbar ist. Zur rotationsgesicherten Fixation des Aufbauteils bezüglich des Implantatkörpers ist wenigstens eine Anlagefläche, vorzugsweise in der Ausnehmung, vorgesehen, an welcher eine zugeordnete weitere Anlagefläche des Aufbauteils formschlüssig zur Anlage gebracht wird, wobei die genannten Anlageflächen zweckmäßig als Hexagon ausgebildet sind. Das Aufbauteil, oftmals als Kronenaufbau bezeichnet, dient zur Befestigung von Suprastrukturen. Zementierbare Kronen mit Metallgerüsten werden heute üblicherweise unter Verwendung von Tiefziehfolie, Tauchwachs oder Modelierkunststoff hergestellt und mit dem Kronenaufbau oder Aufbauteil verbunden. Der Fertigungsaufwand ist nicht unerheblich, und es sind besondere Maßnahmen erforderlich, um eine dauerhafte rotationsgesicherte Verbindung zu gewährleisten. Es gelangen auch vorgefertigte Kronengerüste oder Galvanokappen zum Einsatz, welche keramisch verblendet werden.

Ferner ist aus der europäischen Patentanmeldung gemäß EP 323 823 A 2 ein Implantat zur Befestigung von Zahnprothesen bekannt, dessen im Kiefer verankerbarer Implantatkörper eine zylindrische Bohrung für einen gleichfalls zylindrischen Zentrierstift aufweist. Das die Suprakonstruktion tragende Aufbauteil enthält eine Gewindebohrung für einen Gewindebolzen des Zentrierstiftes. Dem Zentrierstift ist ferner ein Andruckring mit einer konischen Außenfläche derart zugeordnet, daß beim Anziehen der Gewindeverbindung des Zentrierstiftes und des Aufbauteils eine axiale und radiale Verspannung von zwei elastischen Dichtringen erreicht wird. Im Verbindungsbereich ist ferner eine zylindrische Hülse zwischen dem Implantatkörper und dem Aufbauteil vorgesehen, der mittels eines radial angeordneten Einlegestiftes bezüglich des Aufbauteils gegen Verdrehung gesichert ist. Mittels der genannten elastischen Dichtringe soll eine Beweglichkeit des Aufbauteils bezüglich des Implantatkörpers ähnlich der natürlichen Zahnbeweglichkeit erreicht werden. Des weiteren soll über den erwähnten Andruckring sowie wenigstens einen der genannten elastischen Dichtringe aufgrund einer Verformung und Vorspannung die Haltekraft zwischen dem Implantatkörper und dem Aufbauteil erreicht werden. Durch Toleranzen und ferner infolge von Änderungen, insbesondere der Elastizität und Federeigenschaft der elastischen Dichtringe kann schon nach geraumer Zeit die Haltekraft abnehmen mit der Gefahr, daß ein völlig unerwünschtes Lösen des Aufbauteils vom Implantatkörper eintritt. Des weiteren sind Spalte zwischen den einzelnen Komponenten vorhanden, so daß Bakterien eindringen und unerwünschte entzündliche Folgen in der Mundhöhle bzw. im Durchtrittsbereich der Gingiva hervorrufen.

Hiervon ausgehend liegt der Erfindung die Aufgabe zugrunde, das Dentalimplantat der genannten Art dahingehend weiterzubilden, daß eine funktionsgerechte dauerhafte Verbindung eines Keramikkörpers, der als Hülse oder Kappe ausgebildet sein kann, mit dem Aufbauteil geschaffen wird. Besondere Verbindungstechniken, welche im Dentallabor mit hohem Aufwand zu realisieren sind, sollen vermieden werden. Die Verbindung zwischen dem Keramikörper und dem Implantat, insbesondere desssen Aufbauteil soll hohen Anforderungen genügen und insbesondere eine spielfreie, dauerhafte Verbindung gewährleisten.

Die Lösung dieser Aufgabe erfolgt gemäß den im Patentanspruch 1 angegebenen Merkmalen.

Das vorgeschlagene Dentalimplantat zeichnet sich durch eine funktionsgerechte Konstruktion aus und ermöglicht eine problemlose Verbindung des Keramikkörpers mit dem Implantat. Der Keramikkörper enthält einen Stift, welcher in eine vorzugsweise axial gerichtete Nut des Aufbauteils eingreift. Der Stift besteht in zweckmäßiger Weise gleichfalls aus Keramik und besitzt zumindest im Bereich der axialen Nut des Aufbauteils eine zylindrische Außenkontur. Der Außendurchmesser des Stiftes und die Breite der Nut sind derart aufeinander abgestimmt, daß der Keramikstift spielfrei an den Nutwänden anliegt. Der Stift ist in zweckmäßiger Weise mit dem Keramikkörper fest verbunden. Das Aufbauteil enthält eine Durchgangsbohrung und eine insbesondere konische Ringschulter für eine Halteschraube, mittels welcher die Verbindung mit dem Implantatkörper erfolgt. Die Halteschraube liegt mit einem Schraubenkopf an der genannten Ringschulter an, wobei mittels der Halteschraube die axiale Verbindung des Aufbauteiles mit dem Implantatkörper herstellbar ist. Die Verbindung des Aufbauteils mit dem Implantatkörper ist somit erfindungsgemäß unabhängig von der in bevorzugter Weise rotationsgesicherten Verbindung des Keramikkörpers mittels des Stiftes auf dem Aufbauteil.

Das Aufbauteil besitzt, bevorzugt im wesentlichen in der Mitte der Längserstreckung, einen Flansch, an welchem der Keramikkörper mit einer axialen Stirnfläche spiel- und spaltfrei in besonders zweckmäßiger Weise anliegt. Die Außenkontur des Flansches geht kontinuierlich in die Außenfläche des Keramikkörpers über, wobei im Übergangsbereich in bevorzugter Weise ein Spalt, Absatz oder dergleichen nicht vorhanden ist. Ferner enthält der Keramikkörper eine axiale Durchgangsöffnung, durch welche die genannte Halteschraube samt Kopf durchführbar ist. Der Innendurchmesser dieser axialen Durchgangsöffnung ist größer als der Innendurchmesser des Aufbauteils in dem Bereich, welcher an die genannte Ringschulter in Richtung zum Implantatkörper anschließt.

Erfindungsgemäß wird eine Funktionstrennung der Verbindung des Aufbauteils mit dem Implantatkörper und andererseits der Verbindung des Keramikkörpers mit dem Aufbauteil sichergestellt. Die Rotationssicherung des Aufbauteils bezüglich des Implantatkörpers wird in bevorzugter Weise mittels korrespondierenden zumindest teilweise axialen Anlageflächen des Aufbauteils und des Implantatkörpers sichergestellt. Die spielfreie Rotationssicherung des Keramikkörpers bezüglich des Aufbauteils erfolgt mittels des radialen Stiftes, der in die axiale Nut des Aufbauteils eingreift.

Eine Metallhülse zwischen Keramikkörper und Aufbauteil ist nicht erforderlich und der Keramikkörper liegt mit seiner Innenfläche direkt an der korrespondierend ausgebildeten Außenfläche des Aufbauteils an, wobei gegebenenfals noch ein Verbindungsmittel, wie z.B. Dentalzement, dazwischengeschaltet ist. Der Keramikkörper ist durch zusätzliche Verbindungsmittel, sei es Dentalzement oder ähnliches mit dem Aufbauteil verbunden und insgesamt werden Relativbewegungen zwischen Keramikkörper und Kronenaufbau zuverlässig vermieden. Das erfindungsgemäße Implantat ermöglicht die Realisierung unterschiedlicher Prothetik-Konzepte. So können zementierbare Kronen durch Direktverblendung des Keramikkörpers hergestellt werden, welcher als Keramikkern dient. Ferner kann der Keramikkörper auch als Vollkeramik-Krone ausgebildet sein, welche unmittelbar mit dem Aufbauteil verbunden ist.

Die Erfindung wird nachfolgend anhand des in der Zeichnung dargestellten besonderen Ausführungsbeispiels näher erläutert. Es zeigen:
- Fig. 1: eine seitliche Ansicht des Aufbauteils,
- Fig. 2: teilweise geschnitten das Aufbauteil mit dem Keramikkörper.

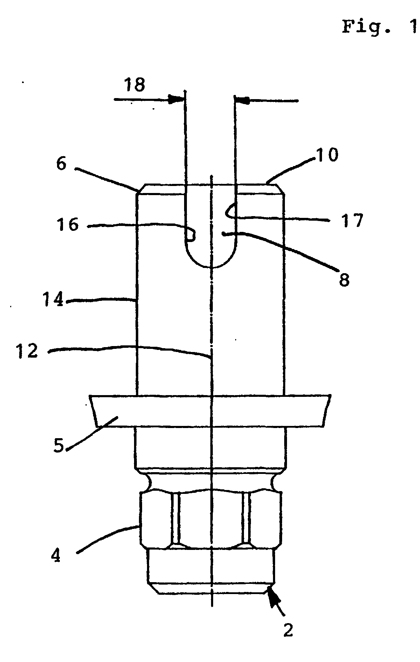

Fig. 1 zeigt in einer seitlichen Ansicht ein Aufbauteil 2, welches in bekannter Weise mit einem hier nicht weiter dargestellten Implantatkörper mittels einer Halteschraube verbindbar ist. Das Aufbauteil besteht in zweckmäßiger Weise aus einem für die Dentalmedizin geeigneten Metall, und zwar insbesondere aus Titan oder einer Titanlegierung. Das Aufbauteil ist innen hohl zur Aufnahme der Halteschraube, welche in ein korrespondierendes Gewinde des in den Kiefer implantierbaren Implantatkörpers einschraubbar ist. Zur Rotationssicherung des Aufbauteils bezüglich des Implantatkörpers besitzt das Aufbauteil an seinem gemäß Zeichnung unteren Ende, welche in eine korrespondierende Ausnehmung des Implantatkörpers einsetzbar ist, Anlageflächen 4, welche hier als Hexagon ausgebildet sind und welchen entsprechende Anlageflächen im Implantatkörper zugeordnet sind. Die Anlageflächen 4 verlaufen zumindest teilweise achsparallel ebenso wie die zugeordneten des Implantatkörpers. Das Aufbauteil 2 enthält ferner einen radialen Flansch 5, an welchem ein nachfolgend noch zu erläuternden Keramikkörper mit einer axialen Stirnfläche zur Anlage gelangt.

Es sei ausdrücklich festgehalten, daß anstelle des hier erläuterten zweiphasigen bzw. zweiteiligen Dentalimplantats im Rahmen der Erfindung auch ein einteiliges Implantat liegt, bei welchem Aufbauteil und Implantatkörper ein einziges Bauteil bilden.

Das Aufbauteil 2 besitzt an seinem koronalen Ende 6 eine Nut 8. Diese Nut 8 beginnt an der Stirnfläche 10 des Aufbauteils 2 und erstreckt sich über eine vorgegebene Länge, vorzugsweise parallel zur Längsachse 12 in das Aufbauteil 2 hinein. Das Aufbauteil 2 besitzt einen gemäß Zeichnung oberen, koronalen Oberteil 14, welcher an der Stirnfläche 10 endet. Der koronale Oberteil 14 besitzt eine zylindrische Oberfläche, deren Außendurchmesser auf den Innendurchmesser zumindest eines Teils eines nachfolgend noch zu erläuternden Keramikkörpers abgestimmt ist. Die somit an der Stirnfläche 10 offene Längsnut 8 besitzt zwei Seitenwände 16, 17, welche zueinander parallel verlaufen und einen definierten Abstand 18 zueinander aufweisen. Die Seitenwände 16, 17 verlaufen in zweckmäßiger Weise parallel zu einer Axialebene, welche in der dargestellten Position orthogonal zur Zeichenebene ebenso wie die genannte Axialebene verlaufen. Die Seitenwände 16, 17 sind ferner in zweckmäßiger Weise plan geschliffen und / oder poliert und gewährleisten eine spielfreie Passung, insbesondere eine Schiebepassung mit einem nachfolgend noch zu erläuternden Stift eines Keramikkörpers.

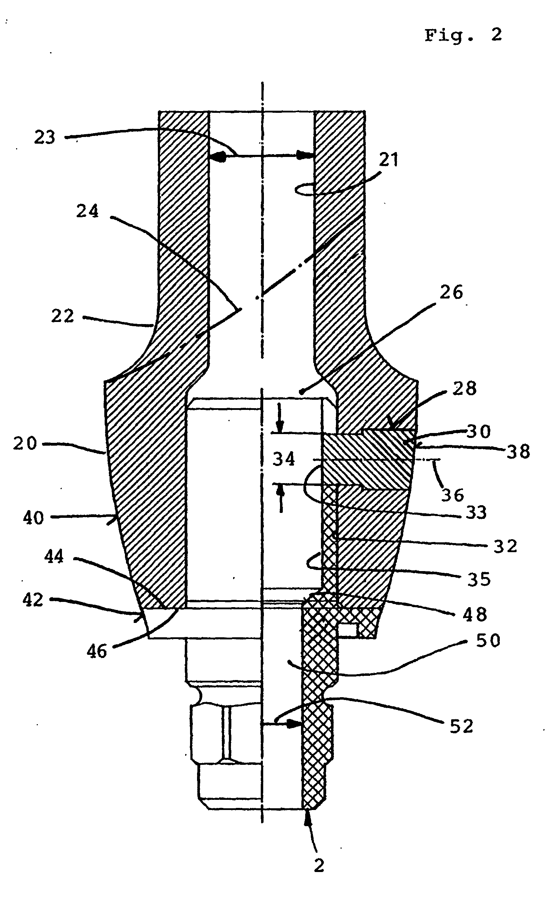

Fig. 2 zeigt teilweise geschnitten und teilweise in einer seitlichen Ansicht das Aufbauteil 2 sowie den Keramikkörper 20, welcher insbesondere aus Aluminiumoxid besteht. Der Keramikkörper 20 ist im Inneren hohl mit einer axialen Durchgangsöffnung 21 ausgebildet und ermöglicht somit das Hindurchführen und Einschrauben der erwähnten Halteschraube. Bei der hier dargestellten Ausführungsform ist der Keramikkörper 20 als eine Keramikhülse ausgebildet, deren Außenfläche 22 zum Aufbau einer Krone ausgebildet ist. Die axiale Durchgangsöffnung 21 besitzt einen Innendurchmesser 23, welcher zumindest gleich groß ist wie der Außendurchmesser der genannten Halteschraube bzw. deren Schraubenkopf.

Wie mit strichpunktierter Linie 24 angedeutet, kann der Keramikkörper 20 auch eine andere Außenkontur aufweisen und/oder unmittelbar als Keramikkappe oder Keramikkrone ausgebildet sein.

Der Keramikkörper 20 enthält in Verlängerung der erwähnten axialen Durchgangsöffnung 21 zumindest im, gemäß Zeichnung unteren, dem Aufbauteil 2 zugeordneten Bereich einen Hohlraum 26, in welchen der koronale Oberteil 14 des Aufbauteils 2 eingreift. Sowohl der koronale Oberteil 14 als auch die Innenfläche des Hohlraumes 26 sind zylindrisch ausgebildet, wobei die Durchmesser derart aufeinander abgestimmt sind, daß der Keramikkörper 20 paßgerecht auf das Aufbauteil 2 in der dargestellten Weise aufgesetzt werden kann. Zur dauerhaften Verbindung des Keramikkörpers 20 mit dem Aufbauteil 2 gelangen bekannte Verbindungsmittel, wie Dentalzement, zum Einsatz.

Der Keramikkörper 20 besitzt im Bereich, welcher den koronalen Oberteil 14 umgibt, eine seitliche Ausnehmung 28, in welche ein Stift 30 eingesetzt ist. Dieser Stift 30 ragt innen über die vorzugsweise zylindrische Innenfläche 32 des Keramikkörpers hinaus und greift in die axiale Nut 8 des Aufbauteils. Der Stift 30 ist zumindest in dem über die Innenfläche 32 vorstehenden Teil in zweckmäßiger Weise zylindrisch ausgebildet mit einem Durchmesser 34. Der Durchmesser 34 des zylindrischen Stiftes 30 stimmt mit dem oben erwähnten Abstand der Nutseitenwände überein. Durch die zylindrische Ausbildung wird unter Einhaltung von sehr engen Toleranzen eine sichere und großen Belastungen standhaltende Anlage des Stiftes an den Nutseitenwänden gewährleistet. Die seitliche Ausnehmung 28 und der Stift 30 weisen miteinander korrespondierende Stufen bzw. Anlageflächen auf und der Stift 30 ist somit in definierter Tiefe von außen her in die Ausnehmung 28 eingesetzt. Der Stift 30 ist erfindungsgemäß fest mit dem Keramikkörper 20 verbunden. Der Stift 30 durchdringt die bevorzugt radial durchgehende Längsnut 8, so daß seine radial innenliegende Stirnfläche 33 zumindest näherungsweise bündig mit der zylindrischen Innenfläche 35 des Aufbauteils 2 liegt. Die Ausnehmung 28 ist radial ausgerichtet, so daß ihre Achse 36 orthogonal zur Längsachse 12 verläuft.

Im Rahmen der Erfindung besteht auch der Stift 30 aus Keramik, insbesondere der gleichen Keramik, nämlich Aluminiumoxid, wie der Keramikkörper 20. Der Keramikstift 30 ist in besonders zweckmäßiger Weise in die Ausnehmung 28 und somit in den Keramikkörper eingeglast. Die radiale Außenfläche 38 des Stiftes 30 liegt auf der Außenkontur40 des Keramikkörpers. Da der Keramikstift 30 und der Keramikkörper 20 aus dem gleichen Werkstoff bestehen, ist in zweckmäßiger Weise der Stift von außen nicht wahrnehmbar.

In einer alternativen Ausgestaltung kann der Stift 30 auch aus einem anderen Material wie beispielsweise Metall, insbesondere Titan bestehen, aus welchem im Rahmen der Erfindung gleichfalls das Aufbauteil 2 besteht. Hierbei ist der Stift 30 kürzer als in Figur 2 dargestellt, wobei seine radial außenliegende Stirnfläche in einem vorgegebenen Abstand vor der Kontur der Außenfläche 40 des Keramikkörpers 20 endet. Der derart gebildete Freiraum ist in zweckmäßiger Weise mit einem zumindest in der Farbe vergleichbaren Material, zweckmäßig mit dem gleichen Material, wie der Keramikkörper 20 ausgefüllt, so daß der Stift 30 von außen nicht wahrnehmbar ist und den ästhetischen Anforderungen im Durchtrittsbereich des Dentalimplantats durch die Gingiva entsprochen wird.

Der Flansch 5 weist eine Außenfläche 42 auf, welche kontinuierlich an die Außenkontur bzw. Außenfläche 40 des Keramikkörpers 20 anschließt. Im Übergangsbereich ist in zweckmäßiger Weise ein Spalt, Stufe oder dergleichen nicht vorhanden. Der Keramikkörper 20 liegt mit seiner axialen Endfläche 44 an der zugewandten Ringfläche 46 des Flansches 5 dicht und spaltfrei an, so daß das Eindringen von Bakterien und / oder das Festsetzen von Plaque zuverlässig und dauerhaft ausgeschlossen wird.

Das Aufbauteil 2 enthält im Inneren ferner eine Ringschulter 48, welche insbesondere konisch ausgebildet ist. Die Ringschulter 48 bildet die Anlagefläche für den Kopf der bereits erwähnten Halteschraube. Wie ersichtlich, kann somit die Halteschraube in die Durchgangsbohrung 50 des Aufbauteils eingeführt werden, bis ihr Schraubenkopf an der Ringschulter 48 zur Anlage gelangt. Die Durchgangsbohrung 50 weist im gemäß Zeichnung unteren Teil, welcher in den Implantatkörper eingreift, einen Innendurchmesser 52 auf, welcher um einen vorgegebenen Betrag kleiner ist als der Innendurchmesser der Innenfläche 35. Mittels der Halteschraube erfolgt eine axiale Fixierung des Aufbauteils im Implantatkörper, wobei ferner über die Anlagefläche 4, welche zumindest teilweise axial ausgerichtet ist und die zugeordnete Anlagefläche des Implantatkörpers eine Rotationssicherung des Aufbauteils 2 bezüglich des Implantatkörpers sichergestellt ist. Die Befestigung des Aufbauteils 2 mit dem Implantatkörper ist gänzlich unabhängig von der Verbindung und Fixierung des Keramikkörpers 20 bezüglich des Aufbauteils 2. Durch die funktionale Trennung der genannten Verbindungen einerseits zwischen Aufbauteil 2 und Implantatkörper und andererseits zwischen Keramikkörper 20 und Aufbauteil 2 können diese Verbindungen unabhängig voneinander ausgebildet werden, so daß letztendlich eine den höchsten Anforderungen entsprechende Verbindung des Keramikkörpers 20 durch Zwischenschaltung des Aufbauteils 2 auf den Implantatkörper sichergestellt ist.

### Bezugszeichen

- 2: Aufbauteil
- 4: Anlagefläche
- 5: Flansch von 2
- 6: koronales Ende
- 8: Nut
- 10: Stinfläche von 2
- 12: Längsachse
- 14: koronaler Oberteil
- 16, 17: Seitenwand
- 18: Abstand zwischen 16 und 17
- 20: Keramikkörper
- 21: axiale Durchgangsöffnung in 20
- 22: Außenfläche
- 23: Innendurchmesser von 20
- 24: strichpunktierte Linie
- 26: Hohlraum
- 28: Ausnehmung
- 30: Stift
- 32: Innenfläche von 20
- 33: Stirnfläche von 30
- 34: Durchmesser von 30
- 35: Innenfläche von 2
- 36: Achse von 28
- 38: radiale Außenfläche von 30
- 40: Außenkontur / Außenfläche von 20
- 42: Außenfläche von 5
- 44: axiale Endfläche von 20
- 46: Ringfläche von 5
- 48: innere Ringschulter in 2
- 50: Durchgangsbohrung in 2
- 52: Innendurchmesser von 50

## Patentansprüche

1. Dentalimplantat, enthaltend einen lmplantatkörper, ein insbesondere aus Titan oder einer Titanlegierung bestehendes Aufbauteil (2), und einen Körper (20), wobei das Aufbauteil (2) mit dem in einen Kiefer implantierbaren Implantatkörper und mit dem Körper (20) verbindbar ist und der Körper (20) in einer Ausnehmung (28) einen Stift (30) aufweist, welcher in eine zur Stirnfläche (10) des Aufbauteils (2) offene Nut (8) des Aufbauteils (2) eingreift,
**dadurch gekennzeichnet, dass** der Körper als Keramikkörper (20) ausgebildet ist, dass der Stift (30) in die Ausnehmung (28) eingesetzt und mit dem Keramikkörper (20) fest verbunden ist, und dass der Stift (30) beim Aufschieben des Keramikkörpers (20) auf das Aufbauteil (2) in dessen Nut (8) einschiebbar ist.

2. Dentalimplantat nach Anspruch 1, **dadurch gekennzeichnet, dass** der Stift (30) aus Keramik besteht und in den Keramikkörper (20) eingeglast ist.

3. Dentalimplantat nach Anspruch 1 oder 2, **dadurch gekennzeichnet, dass** der Stift (30) zumindest im Bereich der Nut (8) zylindrisch ausgebildet ist und unmittelbar an den Seitenwänden (16, 17) der Nut (8) anliegt.

4. Dentalimplantat nach Anspruch 1 oder 2, **dadurch gekennzeichnet, dass** der Abstand (18) zwischen den Seitenwänden (16, 17) und der Durchmesser (34) des Stiftes (30) derart aufeinander abgestimmt sind, dass der Stift (30) spielfrei an den Seitenwänden (16, 17) anliegt.

5. Dentalimplantat nach einem der Ansprüche 1 bis 4, **dadurch gekennzeichnet, dass** die Seitenwände (16, 17) der Nut (8) zueinander parallel laufen.

6. Dentalimplantat nach Anspruch 5, **dadurch gekennzeichnet, dass** die Seitenwände (16, 17) parallel zu einer im wesentlichen durch die Mitte der Nut (8) verlaufenden Axialebene des Aufbauteils (2) angeordnet sind.

7. Dentalimplantat nach einem der Ansprüche 1 bis 6, **dadurch gekennzeichnet, dass** das Aufbauteil (2) eine Durchgangsbohrung (50) mit einer Ringschulter (48) für eine Halteschraube aufweist, mittels welcher die Verbindung des Aufbauteils (2) mit dem im Kiefer verankerbaren Implantatkörper erfolgt, wobei die Ringschulter (48), an welcher der Schraubenkopf der Halteschraube zur Anlage bringbar ist, bevorzugt konisch ausgebildet ist.

8. Dentalimplantat nach einem der Ansprüche 1 bis 7, **dadurch gekennzeichnet, dass** die Achse (36) des Stiftes (30) orthogonal zur Längsachse (12) des Aufbauteils (2) und des Keramikkörpers (20) angeordnet ist.

9. Dentalimplantat nach einem der Ansprüche 1 bis 8, **dadurch gekennzeichnet, dass** das Aufbauteil (2) mit seinem koronalen Oberteil (14) in den Keramikkörper (20) hineinragt und / oder dass der Oberteil (14) eine zylindrische Außenfläche aufweist, an welcher der Keramikkörper (20) unmittelbar anliegt.

10. Dentalimplantat nach einem der Ansprüche 1 bis 9, **dadurch gekennzeichnet, dass** das Aufbauteil (2) einen radialen Flansch (5) aufweist, an welchem der Keramikkörper (2) mit einer axialen Endfläche (44) anliegt, und dass die Außenfläche (42) des Flansches (5) des Aufbauteils (2) im wesentlichen kontinuierlich an die Außenfläche (40) des Keramikkörpers (20) anschließt.

11. Dentalimplantat nach einem der Ansprüche 1 bis 10, **dadurch gekennzeichnet, dass** der Keramikkörper (20) eine axiale Durchgangsöffnung (21) aufweist, wobei der Innendurchmesser (23) der axialen Durchgangsöffnung (21) zumindest gleich groß ist wie der Außendurchmesser des Schraubenkopfes einer Halteschraube, mittels welcher die Verbindung des Aufbauteils (2) mit dem in den Kiefer implantierbaren Implantatkörper erfolgt, und / oder dass das Aufbauteil (2) im koronalen Oberteil (14) eine Innenfläche (35) mit einem Innendurchmesser aufweist, welcher zumindest gleich groß ist wie der Außendurchmesser des Schraubenkopfes der Halteschraube.

## Claims

1. Dental implant comprising an implant body, a mounting member (2), consisting in particular of titanium or a titanium alloy, and a body (20), the mounting member (2) being attachable to an implant body implantable in a jawbone and to the body (20), and the body (20) having in a recess (28) a pin (30), which engages in a groove (8) of the mounting member (2) open to the end face (10) of the mounting member (2), **characterised in that** the body is formed as a ceramic body (20), **in that** the pin (30) is introduced into the recess (28) and is securely attached to the ceramic body (20), and **in that** the pin (30), when the ceramic body (20) is pushed onto the mounting member (2), can be pushed into the groove (8) thereof.

2. Dental implant according to Claim 1, **characterised in that** the pin (30) consists of ceramic and is glazed into the ceramic body (20).

3. Dental implant according to Claim 1 or 2, **characterised in that** the pin (30), at least in the region of the groove (8), is cylindrical in configuration and directly contacts the side walls (16, 17) of the groove (8).

4. Dental implant according to Claim 1 or 2, **characterised in that** the distance (18) between the side walls (16, 17) and the diameter (34) of the pin (30) are co-ordinated with each other in such a way that the pin (30) contacts the side walls (16, 17) without backlash.

5. Dental implant according to any one of claims 1 to 4, **characterised in that** the side walls (16, 17) of the groove (8) run parallel to each other.

6. Dental implant according to Claim 5, **characterised in that** the side walls (16, 17) are arranged in parallel with an axial plane of the mounting member (2) that extends substantially through the middle of the groove (8).

7. Dental implant according to any one of claims 1 to 6, **characterised in that** the mounting member (2) has a through-bore (50) with an annular collar (48) for a holding screw, by means of which the attachment of the mounting member (2) to the implant body, that can be anchored in the jawbone, is made, the annular collar (48), onto which the screw head of the holding screw can be brought to rest, preferably being conical in configuration.

8. Dental implant according to any one of claims 1 to 7, **characterised in that** the axis (36) of the pin (30) is arranged orthogonally to the longitudinal axis (12) of the mounting member (2) and of the ceramic body (20).

9. Dental implant according to any one of claims 1 to 8, **characterised in that** the mounting member (2) with its coronal top section (14) projects into the ceramic body (20) and/or **in that** the top section (14) has a cylindrical external surface which the ceramic body (20) contacts directly.

10. Dental implant according to any one of claims 1 to 9, **characterised in that** the mounting member (2) has a radial flange (5) which the ceramic body (2) contacts with an axial end face (44), and **in that** the external surface (42) of the flange (5) of the mounting member (2) contacts, substantially without interruption, the external surface (40) of the ceramic body (20).

11. Dental implant according to any one of claims 1 to 10, **characterised in that** the ceramic body (20) has an axial through-opening (21), the internal diameter (23) of the axial through-opening (21) being at least the same size as the external diameter of the screw head of a holding screw, by means of which the attachment of the mounting member (2) to the implant body implantable in the jawbone is made, and/or **in that** the mounting member (2) has, in the coronal top section (14), an interior surface (35) with an internal diameter that is at least the same size as the external diameter of the screw head of the holding screw.

## Revendications

1. Implant dentaire, comprenant un corps d'implant, une partie de montage (2) composée en particulier de titane ou d'un alliage de titane et un corps (20), la partie de montage (2) pouvant être reliée à un corps d'implant pouvant être implanté dans une mâchoire et au corps (20) et le corps (20) présentant, dans un évidement (28), une broche (30) qui s'engage dans une rainure (8) de la partie de montage (2) ouverte en direction de la surface frontale (10) de la partie de montage (2),
***caractérisé en ce que*** le corps est conformé en corps en céramique (20), ***en ce que*** la broche (30) est enfoncée dans l'évidement (28) et est reliée fixement au corps en céramique (20), et ***en ce que*** la broche (30) peut être enfoncée dans la rainure (8) lors de l'enfilage du corps en céramique (20) sur la partie de montage (2).

2. Implant dentaire selon la revendication 1, ***caractérisé en ce que*** la broche (30) est composée de céramique et est vitrifiée dans le corps en céramique (20).

3. Implant dentaire selon la revendication 1 ou 2, ***caractérisé en ce que*** la broche (30) est de conformation cylindrique au moins au niveau de la rainure (8) et s'appuie directement contre les parois latérales (16, 17) de la rainure (8).

4. Implant dentaire selon la revendication 1 ou 2, ***caractérisé en ce que*** la distance (18) entre les parois latérales (16, 17) et le diamètre (34) de la broche (30) sont mutuellement adaptés de telle manière que la broche (30) s'appuie sans jeu contre les parois latérales (16, 17).

5. Implant dentaire selon l'une quelconque des revendications 1 à 4, ***caractérisé en ce que*** les parois latérales (16, 17) de la rainure (8) sont parallèles entre elles.

6. Implant dentaire selon la revendication 5, ***caractérisé en ce que*** les parois latérales (16, 17) sont placées parallèlement à un plan axial de la partie de montage (2) passant pour l'essentiel par le centre de la rainure (8).

7. Implant dentaire selon l'une quelconque des revendications 1 à 6, ***caractérisé en ce que*** la partie de montage (2) présente un passage (50) avec un épaulement annulaire (48) pour une vis de maintien avec laquelle est effectuée la liaison entre la partie de montage (2) et le corps d'implant pouvant être ancré dans la mâchoire, l'épaulement annulaire (48) contre lequel la tête de la vis de maintien peut être mise en appui étant de préférence de forme conique.

8. Implant dentaire selon l'une quelconque des revendications 1 à 7, ***caractérisé en ce que*** l'axe (36) de la broche (30) est placé perpendiculairement à l'axe longitudinal (12) de la partie de montage (2) et du corps en céramique (20).

9. Implant dentaire selon l'une quelconque des revendications 1 à 8, ***caractérisé en ce que*** la partie de montage (2) dépasse dans le corps en céramique (20) avec sa partie supérieure coronale (14) et/ou ***en ce que*** la partie supérieure (14) présente une surface extérieure cylindrique contre laquelle s'appuie directement le corps en céramique (20).

10. Implant dentaire selon l'une quelconque des revendications 1 à 9, ***caractérisé en ce que*** la partie de montage (2) présente une bride radiale (5) contre laquelle le corps en céramique (20) s'appuie avec une surface d'extrémité axiale (44), et ***en ce que*** la surface extérieure (42) de la bride (5) de la partie de montage (2) se raccorde pour l'essentiel de manière continue à la surface extérieure (40) du corps en céramique (20).

11. Implant dentaire selon l'une quelconque des revendications 1 à 10, ***caractérisé en ce que*** le corps en céramique (20) présente un passage axial (21), le diamètre intérieur (23) du passage axial (21) étant au moins aussi grand que le diamètre extérieur de la tête d'une vis de maintien, au moyen de laquelle s'effectue la liaison entre la partie de montage (2) et le corps d'implant pouvant être implanté dans la mâchoire, et/ou ***en ce que*** la partie de montage (2) présente dans la partie supérieure coronale (14) une surface intérieure (35) ayant un diamètre qui est au moins aussi grand que le diamètre extérieur de la tête de la vis de maintien.
